(19) Europäisches Patentamt
European Patent Office
Office européen des brevets

(11) **EP 3 195 345 B1**

(12) **FASCICULE DE BREVET EUROPEEN**

(45) Date de publication et mention de la délivrance du brevet:
**16.06.2021 Bulletin 2021/24**

(21) Numéro de dépôt: **15759917.6**

(22) Date de dépôt: **24.08.2015**

(51) Int Cl.:
*H01J 49/00* (2006.01)      *G06T 7/00* (2017.01)
*G06K 9/00* (2006.01)      *G06K 9/52* (2006.01)

(86) Numéro de dépôt international:
**PCT/FR2015/052254**

(87) Numéro de publication internationale:
**WO 2016/030621 (03.03.2016 Gazette 2016/09)**

(54) **MÉTHODE DE CARACTÉRISATION D'UN ÉCHANTILLON PAR IMAGERIE PAR SPECTROMÉTRIE DE MASSE**

VERFAHREN ZUR CHARAKTERISIERUNG EINER PROBE MITTELS MASSENSPEKTROMETRIEBILDGEBUNG

METHOD FOR CHARACTERISING A SAMPLE BY MASS SPECTROMETRY IMAGING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.08.2014 FR 1457993**

(43) Date de publication de la demande:
**26.07.2017 Bulletin 2017/30**

(73) Titulaire: **Imabiotech**
**59120 Loos (FR)**

(72) Inventeurs:
• **STAUBER, Jonathan**
**F-59320 Haubourdin (FR)**
• **BONNEL, David**
**F-62840 Laventie (FR)**
• **PAMELARD, Fabien**
**F-59280 Armentieres (FR)**
• **PICARD DE MULLER, Gaël**
**F-59000 Lille (FR)**

(74) Mandataire: **Cabinet Becker et Associés**
**25, rue Louis le Grand**
**75002 Paris (FR)**

(56) Documents cités:
**US-A1- 2010 111 396    US-A1- 2012 053 447**

• **LU-TAO WENG ET AL: "Morphology and Miscibility of Blends of Ethylene-Tetrafluoroethylene Copolymer/Poly(methyl methacrylate) Studied by ToF SIMS Imaging", MACROMOLECULES, vol. 31, no. 3, 1 février 1998 (1998-02-01), pages 928-932, XP055198254, ISSN: 0024-9297, DOI: 10.1021/ma961916m**
• **STEPHEN E. REICHENBACH ET AL: "Interactive spatio-spectral analysis of three-dimensional mass-spectral (3DxMS) chemical images", SURFACE AND INTERFACE ANALYSIS, vol. 43, no. 1-2, 9 janvier 2011 (2011-01-09), pages 529-534, XP055198365, ISSN: 0142-2421, DOI: 10.1002/sia.3553**
• **AHMED S. ATTIA ET AL: "Monitoring the Inflammatory Response to Infection through the Integration of MALDI IMS and MRI", CELL HOST & MICROBE, vol. 11, no. 6, 1 juin 2012 (2012-06-01), pages 664-673, XP055198570, ISSN: 1931-3128, DOI: 10.1016/j.chom.2012.04.018**
• **KARL E MAYERHOFER ET AL: "Three dimensional analysis of self-structuring organic thin films using time-of-flight secondary ion mass spectrometry", THIN SOLID FILMS, ELSEVIER-SEQUOIA S.A. LAUSANNE, CH, vol. 519, no. 18, 5 avril 2011 (2011-04-05), pages 6183-6189, XP028227208, ISSN: 0040-6090, DOI: 10.1016/J.TSF.2011.04.018 [extrait le 2011-04-15]**

- **PER MALMBERG ET AL: "Subcellular localisation of cholesterol and phosphocholine with pattern-recognition-imaging-TOF-SIMS", SPECTROSCOPY, vol. 18, no. 4, 1 janvier 2004 (2004-01-01), pages 503-511, XP055198349, ISSN: 0712-4813, DOI: 10.1155/2004/928263**
- **JULIA D. WULFKUHLE ET AL: "Early detection: Proteomic applications for the early detection of cancer", NATURE REVIEWS CANCER, vol. 3, no. 4, 1 avril 2003 (2003-04-01), pages 267-275, XP055091735, ISSN: 1474-175X, DOI: 10.1038/nrc1043**
- **RITA CASADONTE ET AL: "Imaging mass spectrometry to discriminate breast from pancreatic cancer metastasis in formalin-fixed paraffin-embedded tissues", PROTEOMICS, vol. 14, no. 7-8, 5 avril 2014 (2014-04-05), pages 956-964, XP055198420, ISSN: 1615-9853, DOI: 10.1002/pmic.201300430**
- **THEODORE ALEXANDROV ET AL: "MALDI-imaging segmentation is a powerful tool for spatial functional proteomic analysis of human larynx carcinoma", JOURNAL OF CANCER RESEARCH AND CLINICAL ONCOLOGY, SPRINGER, BERLIN, DE, vol. 139, no. 1, 6 septembre 2012 (2012-09-06), pages 85-95, XP035157149, ISSN: 1432-1335, DOI: 10.1007/S00432-012-1303-2 cité dans la demande**

**Description**

**Domaine technique**

L'invention concerne une méthode de caractérisation d'un échantillon utilisant l'imagerie par spectrométrie de masse. Plus particulièrement, l'invention propose d'utiliser des données d'imagerie obtenues par spectrométrie de masse pour extraire et mesurer des données morphométriques et/ou de texture associées à la distribution d'un ou plusieurs ions dans un échantillon. L'invention propose également d'utiliser de telles données morphométriques et/ou de texture pour identifier et/ou sélectionner une ou plusieurs molécules d'intérêt dans un échantillon.

D'une manière générale, l'invention trouve des applications dans tout domaine où la caractérisation d'un échantillon ou d'un composé dans un échantillon est utile/nécessaire. L'invention trouve par exemple des applications dans le domaine pharmaceutique pour identifier des marqueurs moléculaires dans différents tissus biologiques, ou dans le domaine du diagnostic médical, pour identifier un type de tissu et/ou de cellule dans un échantillon.

**Etat de la technique**

La spectrométrie de masse est une technique largement connue et utilisée en analyse chimique et biochimique, pour détecter et identifier des molécules d'intérêt dans un échantillon. Depuis quelques années, l'imagerie moléculaire par spectrométrie de masse s'est développée, permettant de visualiser la distribution de molécules d'intérêt directement dans un échantillon. L'imagerie par spectrométrie de masse (ISM) rassemble toutes les technologies d'imagerie utilisant une source d'ionisation permettant de localiser des ions moléculaires à partir d'un échantillon. On peut citer de multiples sources d'ionisation, telles que le Laser, des ions, du gaz, un liquide, un solvant, un plasma (sources seules ou combinées), micro-ondes, électrons, qui peuvent être utilisées en mode imagerie, telles que le DESI (« Desorption Electrospray Ionization »), le LAESI (« Laser Ablation Electrospray Ionization »), le MALDI (« Matrix Assisted Laser Desorption Ionization »), le SIMS (« Secondary ion Mass Spectrometry »), le MALDESI (Matrix-assisted Laser Desorption Electrospray Ionization ») et le LESA (« Liquid Extraction Surface Analysis »), ICP-MSI (Inductively Coupled Plasma Mass Spectrometry Imaging).

L'imagerie par spectrométrie de masse est actuellement principalement utilisée pour l'analyse de tissus biologiques. En effet, il est possible grâce à l'ISM d'étudier directement la composition moléculaire d'un tissu ou d'une coupe de celui-ci, sans marquage par fluorescence et sans radioactivité. De plus, de par sa spécificité, l'ISM permet de discriminer et d'identifier des ions détectés directement sur l'échantillon. Ainsi, il est désormais courant d'utiliser l'ISM pour l'étude ou la recherche de marqueurs moléculaires endogènes dans des échantillons biologiques d'intérêt. Plus précisément, il est possible d'analyser directement la distribution d'une molécule connue en ciblant un ion ou son rapport masse sur charge (*m/z*). Il est également possible d'utiliser des outils statistiques, et notamment ACP (Analyse en Composantes Principales), PLSA, T-Test, ANOVA, ou autre, pour comparer au moins deux régions d'intérêt et ainsi identifier une ou plusieurs molécules spécifiques à l'une ou l'autre de ces régions (J. Stauber, et al., J Proteome Res, 2008. 7(3): p. 969-78 ; D. Bonnel et al., Anal Bioanal Chem, 2011). Il est également connu d'utiliser des méthodes de segmentation lors de l'analyse des spectres d'une image d'un échantillon, afin de classer les spectres en fonction de l'intensité des ions dudit échantillon. Ainsi, il est connu de caractériser un tissu biologique en fonction du profil d'intensité moléculaire des zones histologiques détectées (T. Alexandrov et al., J Cancer Res Clin Oncol, 2012. 139(1): p. 85-95 ; T. Alexandrov et al., J Proteomics, 2011. 75(1): p. 237-45). Il est alors possible de classifier des tissus en fonction de leurs profils moléculaires complets et non plus seulement en fonction du profil spectral de quelques marqueurs.

Cependant, toutes les méthodes d'analyse de données d'ISM sont actuellement basées sur l'étude des valeurs d'intensité associées aux rapports *m/z*. Plus précisément, lors de l'acquisition d'une image d'un échantillon par ISM, on analyse ledit échantillon avec un faisceau de la source d'ionisation afin d'enregistrer en chaque point de l'échantillon une moyenne de spectre correspondant aux ions détectés. L'ensemble des données enregistrées se présente sous la forme d'une matrice, avec pour chaque cordonnée d'enregistrement un spectre qui contient sur une colonne les différents rapports *m/z* et dans une seconde colonne les intensités correspondantes. Par la suite, pour un ion particulier (i.e. un rapport *m/z* donné) correspondant à un composé particulier, la mesure de l'intensité de cet ion (ou l'intégrale de l'aire du pic) permet au travers de logiciels de reconstruction d'images d'obtenir la répartition de cet ion (et donc du composé correspondant) en prenant en compte l'intensité du pic avec les coordonnées d'enregistrement et en affectant à chaque point un pixel de couleur et/ou d'intensité de couleur définie. De manière alternative, il est également connu de défocaliser la source d'ionisation de manière à analyser tout ou partie de l'échantillon en un seul tir. La localisation est ensuite obtenue grâce à un détecteur de position (Luxembourg et coll, Anal. Chem 2004).

Cependant, il n'est pas possible de discriminer deux échantillons biologiques ayant les mêmes profils ou signatures spectrales, quand bien même ils présenteraient des organisations de tissus et/ou cellulaires différentes. Il est alors nécessaire de combiner l'analyse par ISM à une autre méthode d'analyse de l'échantillon telle qu'une coloration (immunohistochimie, historadiographie etc.), afin par exemple d'identifier des différences dans l'organisation tissulaire des deux échantillons.

L'article de Reichenbach et al. "Interactive spatio-spectral analysis of three-dimensional mass-spectral (3DxMS) chemical images", Surface and Interface Analysis, vol. 43, p. 529-534, DOI : 10 .1002/ sia.3553, décrit un outil informatique pour la visualisation interactive de données spatio-spectrales 3DxMS, permettant de délimiter des caractéristiques spatiales telles que des cellules ou des régions au sein d'une cellule.

L'article de Casadonte et al. "Imaging mass spectrometry to discriminate breast from pancreatic cancer metastasis in formalin-fixed paraffin-embedded tissues", Proteomics, vol. 14, p. 956-964, DOI :10 .1002/pmic.201300430, décrit l'utilisation de l'imagerie par spectrométrie de masse pour classifier l'origine de métastases cancéreuses.

## Résumé de l'invention

On propose d'utiliser des données d'imagerie d'un échantillon (i.e., positions, rapports *m/z,* intensités), obtenues classiquement par imagerie par spectrométrie de masse, non plus seulement en tenant compte des valeurs d'intensité associées aux ions dudit échantillon, mais en tenant compte de l'arrangement spatial desdits ions dans l'échantillon, et des mesures qui caractérisent ledit arrangement spatial.

On caractérise un échantillon en fonction de la morphologie de la distribution et des mesures associées (données morphométriques), et/ou de la texture d'un ou plusieurs ions dans l'échantillon. Les formes et l'agencement des formes associées à la présence desdits ions dans un échantillon permettent d'obtenir des informations supplémentaires (surface, forme, volume, motif, répétition, quantité, dispersion, et les valeurs qui dérivent de ces informations, tel que leur ratio, etc.) par rapport aux informations découlant des intensités spectrales. Il est alors possible de caractériser un échantillon en fonction des formes d'au moins un ion dans ledit échantillon et/ou des dimensions de ces formes et/ou de leur agencement dans l'échantillon. Il est ainsi possible de différencier deux échantillons présentant des profils moléculaires similaires ou identiques. De même, il est possible d'identifier un échantillon sur la base de ses données morphométriques et/ou de texture, d'identifier des molécules d'intérêt dans un échantillon en ciblant par exemple des formes et/ou textures spécifiques, etc. Plus généralement, on propose de caractériser la morphométrie et/ou la texture de la distribution d'un ou plusieurs ions dans un échantillon et d'utiliser ces données morphométriques et de texture en complément ou à la place des données d'imagerie spectrales.

Cette caractérisation peut être combinée aux méthodes de traitement des données d'imagerie actuelles tenant compte des intensités par exemple, et plus généralement à toute méthode de caractérisation d'un échantillon, y compris par traitement optique, physique, par coloration etc.

Il est décrit une méthode de caractérisation d'un échantillon par imagerie par spectrométrie de masse (ISM) selon laquelle on caractérise un arrangement spatial d'au moins un ion dans ledit échantillon à partir des données d'imagerie associées audit ion, en termes de morphométrie et/ou de texture.

Autrement dit, on mesure et/ou quantifie l'arrangement spatial d'au moins un ion dans ledit échantillon à partir de données d'ISM, afin d'identifier des formes, agencements de formes, mesures particulières et de caractériser en conséquence la distribution dudit ion dans l'échantillon par ces caractéristiques morphométriques et/ou de texture.

Ainsi, l'invention a pour objet une méthode de caractérisation d'un échantillon choisi parmi un tissu biologique et un liquide biologique par imagerie par spectrométrie de masse (ISM), ladite méthode comprenant les étapes selon lesquelles :

a) On acquiert des données par ISM, pour au moins un ion dans l'échantillon ; puis
b) On mesure et/ou quantifie un arrangement spatial dudit au moins un ion dans l'échantillon à partir de données relatives aux positions dudit au moins un ion dans ledit échantillon afin d'identifier des caractéristiques morphométriques définissant des formes géométriques et des dimensions mathématiques associées à ces formes géométriques et/ou des caractéristiques de texture définissant un agencement des formes géométriques entre elles, et de caractériser en conséquence la distribution dudit au moins un ion dans l'échantillon par ces caractéristiques morphométriques et/ou de texture.

L'invention a également pour objet un procédé d'identification par imagerie par spectrométrie de masse (ISM) d'une molécule d'intérêt dans un échantillon d'intérêt choisi parmi un tissu biologique et un liquide biologique, selon lequel

i) On analyse un arrangement spatial d'une pluralité d'ions dans l'échantillon d'intérêt à partir de données d'ISM desdits ions dans ledit échantillon pour déterminer des caractéristiques morphométriques définissant des formes géométriques et des dimensions mathématiques associées à ces formes géométriques et/ou des caractéristiques de texture définissant un agencement des formes géométriques entre elles associées auxdits ions dans ledit échantillon ;
ii) On compare les caractéristiques morphométriques et/ou de texture associées à la pluralité d'ions dans ledit échantillon d'intérêt avec des données morphométriques et/ou de texture associées à une pluralité d'ions dans un échantillon de référence ;

iii) On identifie au moins un ion caractéristique de l'échantillon, qui présente des caractéristiques morphométriques et/ou de textures différentes par rapport à celles qu'il a dans l'échantillon de référence ;

iv) On identifie la molécule correspondant audit ion identifié à l'étape iii).

Selon un exemple utile à la compréhension de l'invention, on décrit également un procédé d'identification d'un échantillon par imagerie par spectrométrie de masse dans lequel :

i) On établit une base de données, ou un modèle, avec des données morphométriques et/ou de texture associées à une pluralité d'ions de référence, obtenues à partir de plusieurs échantillons de référence, lesdites données morphométriques et/ou de texture étant représentatives de l'arrangement spatial desdits ions de référence dans lesdits échantillons de référence ;

ii) On enregistre des données morphométriques définissant des formes géométriques et des dimensions mathématiques associées à ces formes géométriques et/ou des données de texture définissant un agencement des formes géométriques entre elles associées à au moins un ion dans l'échantillon à identifier ;

iii) On compare des données morphométriques et/ou de textures associées aux ions de l'échantillon à identifier avec les données morphométriques et/ou de textures associées aux ions de référence contenues dans la base de données ou le modèle.

Un autre objet de l'invention consiste en un support de données lisible par ordinateur comprenant des instructions exécutables par l'ordinateur et adaptées pour permettre à un système informatique d'exécuter la méthode de caractérisation d'un échantillon, et/ou le procédé d'identification d'une molécule d'intérêt dans un échantillon selon l'invention.

## Brève description des figures

**Figure 1** : Exemple de représentation de jeux de données acquis par imagerie par spectrométrie de masse pour deux échantillons (1A et 1B), où le blanc vaut 0 et le noir une valeur maximale ;

**Figure 2:** Exemple de caractérisation morphologique de données d'imagerie par spectrométrie de masse d'échantillons de tissus pulmonaires selon l'invention, aboutissant à l'identification de tissu pulmonaire pathologique (Airways fibrosés) comparativement à un tissu sain (Aiways sain) ;

**Figure 3** : Exemple de dénombrement des voies aériennes par morphométrie par mise en oeuvre du procédé selon l'invention à des jeux de données d'imagerie par spectrométrie de masse de deux échantillons de voies aériennes (airways) de deux tissus fibrosés ;

**Figure 4** : Analyse et détermination de la surface des voies aériennes de poumons de rats par extrapolation de données morphologiques obtenues par le procédé selon l'invention à partir des données d'imagerie desdits échantillons ;

**Figure 5** : Représentation de la distribution de deux ions dans un échantillon de peau par imagerie par spectrométrie de masse et caractérisation de leur arrangement spatial dans l'échantillon pour l'identification de tissus (e.g. épiderme et stratum corneum)

**Figure 6** : Représentation schématique des motifs et textures obtenues à partir des jeux de données d'imagerie par spectrométrie de masse d'une coupe de tissu biologique sur boite de Petri, par le procédé selon l'invention appliqué au dénombrement et typage des cellules dans ladite coupe de tissu biologique ;

**Figure 7** : Représentation schématique de différents critères morphométriques pour un ion cible qui peuvent être utilisés pour discriminer deux régions d'intérêt dans des échantillons A et B présentant des moyennes des intensités identiques pour ledit ion cible, ne permettant pas à elles seules de les différencier. Pour une même moyenne d'intensité pour un ion donné, la distribution peut ainsi varier en terme de nombre d'objets, surface de l'objet, dispersion dans la région d'intérêt, forme, variabilité des surface d'un objet à l'autre, etc. ;

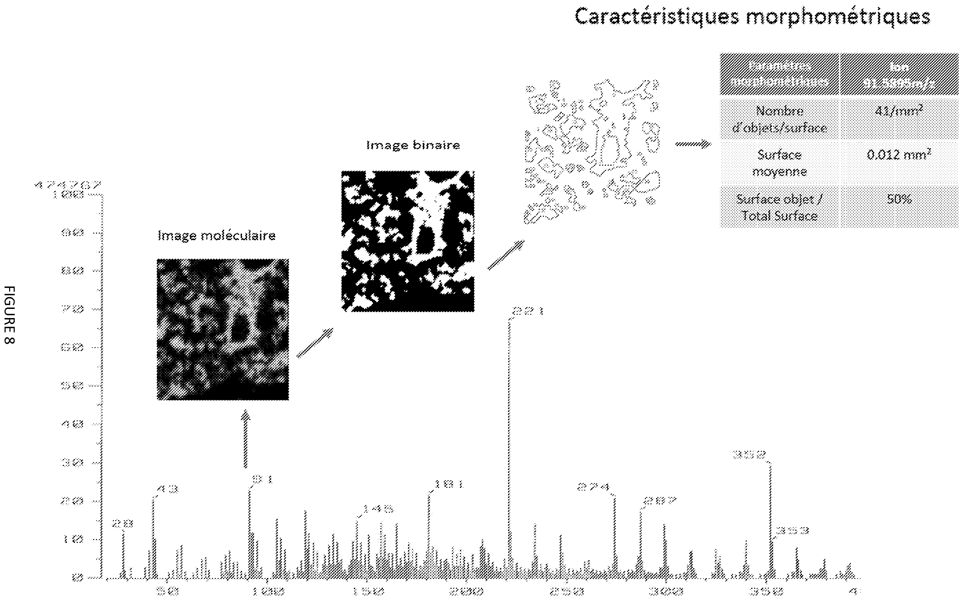

**Figure 8** : Représentation schématique de certaines étapes du procédé de caractérisation et/ou d'identification selon l'invention, aboutissant à l'extraction de critères morphométriques pour l'ion ayant un *m/z* de 91,5895 dans un échantillon : l'image moléculaire est soumise à une segmentation pour obtenir une image binaire qui est traitée de manière à caractériser la distribution dudit ion en nombre d'objets et surface desdits objets ;

**Figure 9** : Comparaison pour un tissu de référence (tissu contrôle) et un tissu d'intérêt (tissu traité) de la distribution du *m/z* 718,505 au niveau de l'image moléculaire montrant l'intensité de la distribution et de l'image binaire mettant en avant la différence de surface de la distribution dudit *m/z*.

**<u>Exposé de l'invention</u>**

L'invention a donc pour objet une méthode de caractérisation d'un échantillon par imagerie par spectrométrie de masse (ISM) selon laquelle on caractérise un arrangement spatial d'au moins un ion dans ledit échantillon à partir des données d'imagerie associées audit ion, en termes de morphométrie et/ou de texture. Selon l'invention, la distribution de l'ion dans l'échantillon n'est plus seulement caractérisée en fonction de l'intensité mais également en fonction des formes / objets que dessine cette distribution et des mesures associées (surface, volume, etc.) et/ou de l'agencement de ces formes/objets entre eux. Il est alors aisément possible de discriminer deux échantillons qui, bien que présentant une intensité moyenne identique pour un ion donné, présentent des caractéristiques morphométriques et/ou de texture différentes associées audit ion.

La méthode selon l'invention peut s'appliquer à tout type d'échantillon pouvant être analysé par un spectromètre de masse sous vide (MALDI) ou atmosphère ambiant (LAESI, DESI), qu'il soit organique ou inorganique, liquide ou solide. Par exemple, la méthode selon l'invention est particulièrement adaptée à la caractérisation de tissus biologiques, d'origine animale ou végétale.

Par « tissu », on entend d'une manière générale un ensemble de cellules de même origine et regroupées en un ensemble fonctionnel pour concourir à une même fonction. Dans certains cas, un tissu peut s'entendre d'un organe, d'un fragment d'organe ou d'une région spécifique d'un organe, regroupant éventuellement plusieurs ensembles de cellules. Par exemple, le tissu peut être une tumeur localisée au sein d'un organe.

Dans un exemple de mise en œuvre, l'échantillon peut consister en une coupe histologique de tissu(s), dont des régions d'intérêt ont éventuellement été caractérisées au préalable par coloration et/ou par leurs signatures moléculaires. Plus généralement, la méthode selon l'invention peut être utilisée pour caractériser davantage tout ou partie de régions d'intérêt d'un échantillon préalablement identifiées par toute méthode de l'état de la technique.

La méthode selon l'invention peut également être utilisée pour caractériser des liquides biologiques, tels que sang, plasma, sérum, salive, liquide céphalo-rachidien, urine, etc.

Dans le cas d'un échantillon liquide, il est possible de le sécher sur une surface afin de réaliser l'image SM de l'échantillon séché, et ensuite caractériser cet échantillon par la méthode décrite. Il est autrement possible, notamment avec un système d'ISM dit à pression atmosphérique, d'analyser la surface d'un liquide ou d'un solvant.

La méthode selon l'invention peut également être utilisée pour caractériser des échantillons de végétaux.

Par « caractériser un échantillon », on entend associer des propriétés distinctives/propres audit échantillon, lesdites propriétés permettant notamment de le discriminer/identifier parmi d'autres échantillons.

Selon l'invention, on utilise des données d'imagerie, et plus particulièrement des spectres, pour déterminer pour un ion donné l'arrangement spatial qu'il prend dans ledit échantillon. Avantageusement, on utilise plus particulièrement les données associées à un rapport *m/z,* caractéristique d'un ion donné. Dans le contexte de l'invention, l'expression « rapport *m/z* », ou « rapport masse sur charge », désigne une quantité physique caractéristique d'un ion, où m représente la masse et z la valence dudit ion. En imagerie par spectrométrie de masse, un ion donné peut correspondre à plusieurs rapports *m/z*.

L'« arrangement spatial » ou « distribution » d'un ion ou d'un rapport *m/z* s'entend de la ou des formes que dessine la présence dudit ion ou rapport *m/z* dans l'échantillon.

Selon l'invention, on détermine l'arrangement spatial du ou des ions étudiés, de manière à lui/leur associer une ou plusieurs formes, des dimensions, etc. Les données d'imagerie associées à la présence d'au moins un ion dans l'échantillon sont utilisées pour définir des données morphométriques et/ou de texture représentatives de la distribution dudit ion dans l'échantillon, indépendamment de la variation des intensités associées audit ion dans ledit échantillon.

Avantageusement, l'étape de caractérisation de l'arrangement spatial d'au moins un ion dans l'échantillon utilise un procédé de reconnaissance de forme et/ou d'analyse de texture pour segmenter les données d'imagerie dudit ion en régions d'intérêt distinctes et/ou dessiner les contours de motifs. Par exemple, on utilise une technique de morphologie mathématique, telle que la technique de la ligne de partage des eaux, la transformée de Hough, notamment dans sa forme généralisée, des matrices de dépendance spatiales des tons de gris, etc.

Par « données morphométriques » ou « caractéristiques morphométriques », on entend des données/caractéristiques relatives à la ou les formes géométriques, ou motifs, formées par la présence de l'ion considéré dans l'échantillon (ou du rapport *m/z* associé audit ion), et à leurs dimensions mathématiques, telles qu'une surface, un volume, un diamètre, un rayon, une longueur, une largeur, une épaisseur, etc. Dans certains cas, les motifs peuvent consister en des éléments d'écriture, tels que des chiffres, lettres, mots, etc.

Par « données de texture » ou « caractéristiques de texture », on entend des données/caractéristiques relatives à un agencement des motifs entre eux dans l'échantillon, telles que le nombre de motifs répétés, une distance, une dispersion entre lesdits motifs, etc.

Par « échantillon de référence », on entend un échantillon de même nature et/ou origine que l'échantillon d'intérêt. Par exemple, lors de l'étude d'un tissu biologique d'un sujet d'intérêt, l'échantillon de référence consiste en un tissu biologique de même nature provenant d'un sujet témoin.

Selon l'invention, il est possible de caractériser l'arrangement spatial d'un ou plusieurs ions ou rapports $m/z$ dudit échantillon, pris ensemble ou séparément. Ainsi, un motif donné peut être associé à la présence et distribution de plusieurs rapports $m/z$ pris simultanément en considération. De manière alternative, il est possible de caractériser des motifs différents pour différents rapports $m/z$ dans un même échantillon, simultanément ou séquentiellement. Selon l'invention, ces différents rapports $m/z$ peuvent être représentatifs d'un même ion ou d'ions différents.

Dans un mode de réalisation, la méthode selon l'invention comprend une étape préalable d'acquisition de données d'imagerie à partir desquelles les caractéristiques morphométriques et/ou de texture d'au moins un rapport $m/z$ sont déterminées.

La méthode selon l'invention peut être mise en œuvre avec toute technique d'imagerie par spectrométrie de masse connue, et notamment l'imagerie MALDI, LDI, DESI, LESA, LAESI (« Laser Ablation Electrospray Ionization »), DART (« Direct Analysis in Real Time »), SIMS, JEDI (« Jet Desorption Electrospray Ionization »), LAMMA (« Laser Microprobe Mass Analysis »), SMALDI (« Scanning Microprobe Matrix Assisted Laser Desorption Ionization ») en combinaison avec différents types d'analyseurs, tels que le TOF (« Temps de Vol »), Orbitrap, FTICR (« Résonance Cyclotronique des Ions à Transformée de Fourier »), Quadripole (« simple ou triple »), ICP MS etc.

Dans un exemple de mise en œuvre particulier de l'invention, il est possible de visualiser les caractéristiques morphométriques et/ou de texture associées à au moins un ion directement sur une image ionique de l'échantillon, par exemple en utilisant l'imagerie MALDI. Plus précisément, les caractéristiques morphométriques et/ou de texture associées aux ions analysés peuvent être générées sous forme d'images reproduisant l'échantillon, de sorte que l'on peut y visualiser leurs arrangements spatiaux. Bien entendu, il est possible de superposer différentes images de l'échantillon, afin par exemple de visualiser simultanément des données de plusieurs ions, et même des données histologiques ou autres obtenues par d'autres méthodes d'analyse telles que la microscopie optique, la coloration histologique etc.

Dans un mode de réalisation, la méthode de caractérisation d'un échantillon selon l'invention comprend les étapes selon lesquelles :

a) On acquiert des données par ISM, pour au moins un ion dans l'échantillon ; puis

b) On mesure et/ou quantifie un arrangement spatial dudit au moins un ion dans l'échantillon à partir de données relatives aux positions dudit au moins un ion dans ledit échantillon afin d'identifier des caractéristiques morphométriques définissant des formes géométriques et des dimensions mathématiques associées à ces formes géométriques et/ou des caractéristiques de texture définissant un agencement des formes géométriques entre elles, et de caractériser en conséquence la distribution dudit au moins un ion dans l'échantillon par ces caractéristiques morphométriques et/ou de texture.

A partir de l'arrangement spatial d'un ion dans un échantillon d'intérêt, on caractérise ledit ion par ses caractéristiques morphométriques et de texture, spécifiques dudit échantillon. Un même ion, dans un autre échantillon pourra présenter des caractéristiques morphométriques et de texture différentes, quand bien même les profils moléculaires des deux échantillons seraient identiques.

Ainsi, le procédé selon l'invention permet d'acquérir un autre degré d'informations pour un ion dans un échantillon, qui peut être pris en compte seul ou en combinaison avec toute autre donnée/caractéristique de l'échantillon et/ou de l'ion considéré. Par exemple, il est possible d'analyser simultanément ou séquentiellement non seulement les caractéristiques morphométriques et de texture d'un ion d'intérêt, mais également tout ou partie de ses caractéristiques spectrales (intensité des pics des spectres de masse, rapport signal sur bruit ($S/N$), aire des pics, etc.).

Avantageusement, le procédé selon l'invention permet de visualiser simultanément l'ensemble de ces données/caractéristiques directement sur une même image ionique de l'échantillon.

Dans un autre mode de réalisation, la méthode de caractérisation d'un échantillon comprend les étapes consistant à :

c) Segmenter des données d'imagerie de l'échantillon en régions d'intérêt représentatives des profils d'intensité moléculaires de l'échantillon ; et

d) Caractériser un arrangement spatial des ions du profil moléculaire d'une région d'intérêt selon des caractéristiques morphométriques et/ou de texture.

L'étape c) consiste en une segmentation de l'échantillon en fonction des profils moléculaires au sein dudit échantillon. Chaque région d'intérêt correspond à un profil moléculaire obtenu à partir des spectres de masse de l'échantillon. Différentes caractéristiques spectrales peuvent être classiquement utilisées pour obtenir les profils moléculaires dudit échantillon, et notamment l'intensité des pics des spectres de masse, le rapport signal sur bruit (*S/N*), l'aire des pics, etc.

Une fois la ou les régions d'intérêt dans l'échantillon identifiées, on traite les données d'imageries associées à la région d'intérêt sélectionnée pour caractériser l'arrangement spatial de l'ensemble des ions de ladite région d'intérêt sélectionnée. Ce sont les données de l'ensemble des ions dans la région d'intérêt qui sont prises en compte et analysées pour identifier les motifs et textures caractéristiques de ladite région d'intérêt. Là encore, selon l'invention, il est possible de reconstruire une image numérique de l'échantillon à partir de ces données de manière à visualiser les résultats directement sur une image de l'échantillon.

Les étapes c) et d) peuvent être mise en œuvre indépendamment des étapes a) et b), c'est-à-dire sans mise en œuvre des étapes a) et b). Dans un autre mode de réalisation particulier, il est possible de mettre en œuvre successivement les étapes a) et b), puis c) et d), ou inversement, de manière à obtenir différents degrés d'informations en termes de morphométrie et de texture du ou des ions considérés dans l'échantillon considéré. De même, il est possible d'appliquer l'étape d) à plusieurs ou toutes les régions d'intérêt identifiées dans l'étape c).

Dans un autre de mode de mise en œuvre, la méthode de caractérisation comprend l'étape consistant à :
e) Réaliser une base de données (BDD) comprenant des données morphométriques et/ou de texture d'une pluralité d'ions dans ledit échantillon.

De manière alternative, la méthode de caractérisation comprend l'étape consistant à :
f) Créer un modèle comprenant des données morphométriques et/ou de texture d'une pluralité d'ions dans ledit échantillon.

Dans le contexte de l'invention, « une pluralité » signifie deux ou plus.

Un « modèle » s'entend d'un ensemble de données, dans le cas présent de caractéristiques issues de l'échantillon, notamment des données d'intensité, des données morphométriques et/ou de texture, etc., qui ont été modélisées notamment pour définir des dépendances et/ou relations entre lesdites données, et qui est représentatif de l'échantillon considéré. Une « base de données » désigne quant à elle une base dans laquelle est stocké un ensemble de données brutes. Ainsi, il est possible d'obtenir un ensemble de jeux de données, c'est-à-dire de motifs, dimensions, arrangements etc., propre à un échantillon ou type d'échantillon, ou un modèle. Selon l'invention, cette base de données (BDD) ou ce modèle peut être implémentée (étape g) avec les données spectrales d'ISM d'au moins un ion dans ledit échantillon, et/ou des données physicochimiques, physiologiques et/ou biologiques propres audit échantillon. Par exemple, la base de données (BDD), ou le modèle, est implémentée avec des données obtenues par une étude histologique, chimique ou autre, de l'échantillon, ou d'un échantillon identique, afin de définir différentes zones d'intérêt.

Une telle base de données (BDD), ou modèle, peut être particulièrement utile pour identifier rapidement et de manière automatisée un tissu, une région d'un tissu, un type cellulaire, un état physiologique d'un tissu par exemple sain ou pathologique, etc. De même, la base de données, ou le modèle, peut être utilisée pour l'identification et le comptage, ou dénombrement, cellulaire dans un échantillon biologique.

Selon un exemple utile à la compréhension de l'invention, on décrit également un procédé d'identification d'un échantillon par imagerie par spectrométrie de masse dans lequel:

i) On établit une base de données, ou on crée un modèle, avec des données morphométriques et/ou de texture associées à au moins un ion de référence, obtenues à partir de plusieurs échantillons de référence, lesdites données morphométriques et/ou de texture étant représentatives de l'arrangement spatial dudit au moins un ion de référence dans lesdits échantillons de référence ;

ii) On enregistre des données morphométriques et/ou de texture (surface, volume, forme, motif, répétition, etc.) associées à au moins un ion dans l'échantillon à identifier;

iii) On compare des données morphométriques et/ou de textures de l'étape ii) avec les données morphométriques et/ou de textures contenues dans la base de données, ou le modèle, de l'étape i).

A l'étape ii) on analyse un ion correspondant à un ion de la base de données, ou du modèle. Avantageusement, la base de données, ou le modèle, comprend des données morphométriques et/ou de texture associées ou non à une pluralité d'ions de référence. L'ensemble des caractéristiques et définitions décrites ci-dessus en lien avec la méthode de caractérisation d'un échantillon s'appliquent *mutatis mutandis* audit procédé d'identification. Avantageusement, pour chaque échantillon de référence, on établit un jeu de données morphologiques et de textures pour plusieurs ions de manière à caractériser de la manière la plus fiable possible chacun des échantillons de référence.

On procède à l'étape iii) à une analyse des similitudes et/ou des différences entre les différents jeux de données de référence et les jeux de données de l'échantillon à identifier, de manière à sélectionner le ou les échantillons de référence présentant des caractéristiques morphométriques similaires ou identiques, et par là à identifier l'échantillon.

Le procédé selon l'invention peut par exemple permettre d'identifier la nature et/ou l'origine d'un tissu biologique, un type cellulaire, le stade d'évolution d'une maladie, etc.

L'invention a aussi pour objet un procédé d'identification d'une molécule d'intérêt dans un échantillon, selon lequel

i) on analyse un arrangement spatial d'une pluralité d'ions dans l'échantillon d'intérêt à partir de données d'ISM desdits ions dans ledit échantillon pour déterminer des caractéristiques morphométriques définissant des formes géométriques et des dimensions mathématiques associées à ces formes géométriques et/ou des caractéristiques de texture définissant un agencement des formes géométriques entre elles associées auxdits ions dans ledit échantillon;

ii) on compare des données morphométriques et/ou de texture associées à la pluralité d'ions dans ledit échantillon avec des données morphométriques et/ou de texture associées à une pluralité d'ions dans un échantillon de référence ;

iii) on identifie au moins un ion caractéristique de l'échantillon, qui présente des caractéristiques morphométriques et/ou de textures différentes par rapport à celles qu'il a dans l'échantillon de référence ;

iv) on identifie la molécule correspondant audit ion identifié à l'étape précédente.

Un tel procédé permet de découvrir et d'identifier une nouvelle molécule dans un échantillon d'intérêt.

Le procédé d'identification d'une nouvelle molécule d'intérêt dans un échantillon d'intérêt comprend au préalable une étape i) d'acquisition de données d'ISM propres audit échantillon et de caractérisation de la distribution d'un ou plusieurs ions par des caractéristiques morphométriques et/ou de texture.

L'ensemble des caractéristiques et définitions décrites ci-dessus en lien avec la méthode de caractérisation d'un échantillon s'appliquent *mutatis mutandis* au présent procédé d'identification d'une molécule.

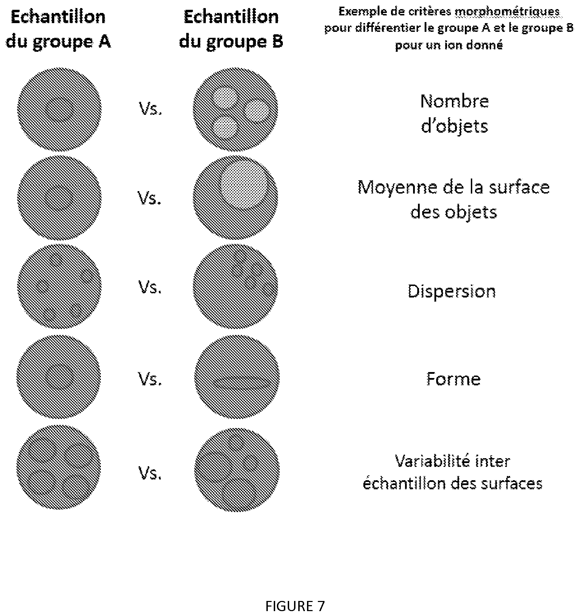

Selon ce mode de réalisation de l'invention, la nature de l'échantillon est connue et on souhaite identifier un ou des marqueurs propres audit échantillon, c'est-à-dire qui ne sont pas présents dans l'échantillon de référence, ou alors qui présente(nt) des caractéristiques morphométriques et/ou de textures différentes par rapport à celles qu'ils ont dans l'échantillon de référence (figure 7). Les caractéristiques morphométriques prises en compte pour un ion donné peuvent par exemple être le nombre d'objets, la moyenne de la surface des objets, la dispersion, la forme, la variabilité des surfaces, etc. On utilise donc préférentiellement un échantillon de référence de même nature et/ou de même type que l'échantillon d'intérêt.

Avantageusement, l'étape ii) peut être mise en œuvre en interrogeant une base de données (BDD) compilant une pluralité de jeux de données de référence de l'échantillon de référence, ou en comparant les données de l'échantillons à un modèle compilant une pluralité de jeux de données de référence de l'échantillon de référence..

Une fois le ou les données morphométriques et/ou de textures distinctives de l'échantillon d'intérêt identifiées, on y associe le ou les ions correspondants afin de remonter à la molécule associée à chacun des ions.

Ce procédé est particulièrement utile dans le domaine pharmaceutique ou médical, notamment pour identifier de nouveaux biomarqueurs.

L'invention a également pour objet un support de données lisible par ordinateur comprenant des instructions exécutables par l'ordinateur et adaptées pour permettre à un système informatique d'exécuter la méthode de caractérisation d'un échantillon selon l'invention, et/ou le procédé d'identification d'une molécule d'intérêt dans un échantillon selon l'invention.

Ainsi, l'invention propose un programme d'ordinateur comprenant des instructions de code de programme pour l'exécution de tout ou partie des étapes exposées ci-dessus, lorsque ledit programme est exécuté sur un ordinateur.

Avantageusement, le programme d'ordinateur comprend des instructions de code de programme pour exécuter au moins l'étape de caractérisation de l'arrangement spatiale d'un ou plusieurs ions dans un échantillon d'intérêt.

Avantageusement, le support de données lisible par ordinateur, ou programme, selon l'invention comporte une base de données, ou un modèle, comprenant des données morphométriques et/ou de texture d'au moins un ion dans au moins un échantillon, et préférentiellement d'une pluralité d'ions pour une pluralité d'échantillons.

*Recherche de marqueurs*

Le procédé selon l'invention peut être utilisé pour l'identification de marqueurs, et notamment des biomarqueurs. En effet, dans le cas d'échantillons biologiques, il est possible d'identifier des variations de morphologie présentes entre deux conditions (par exemple malade vs sain, traité vs véhicule, exposé vs non exposé, etc.). Notamment, selon l'invention, il est possible d'étudier plus particulièrement des ions spécifiquement présents dans une région d'intérêt, préalablement identifiée par une étude macroscopique et/ou microscopique de la structure de l'échantillon par exemple.

Une fois les caractéristiques morphométriques et/ou de texture obtenues, et si après étude statistique les formes associées aux ions étudiés sont considérées comme significativement différentes, il suffit de remonter de manière classique à la ou les masse(s) moléculaire(s) d'intérêt(s) associées. Après interrogation des bases de données spécialisées, la ou les molécule(s) correspondantes peuvent être identifiées. Pour cela, différents tests statistiques différentiels peuvent être utilisés, afin de se baser sur la morphologie des éléments de distributions moléculaires et non seulement sur l'intensité. On peut notamment utiliser le test de Fischer, test z, test de Student, test de Welch, test de Student apparié, ANOVA, test de Dunett, test de Tukey, test de Kruskal-Wallis, test de Wilcoxon-Mann-Whitney, test signé des rangs de Wilcoxon, MANOVA, etc.

*Filtrage et classification moléculaire*

Le procédé selon l'invention peut être utilisé à des fins de filtrage moléculaire.

Par exemple, il est possible de sélectionner, de manière arbitraire ou non, une morphométrie particulière (par exemple, une forme en étoile de X mm2 de surface minimale) pour effectuer un filtre moléculaire dans un échantillon. Ainsi, seuls les ions qui entrent dans le(s) critère(s) défini(s) sont sélectionnés. Il est alors possible d'identifier des molécules ayant le même impact de forme que celui recherché.

Un tel filtrage peut également permettre de classifier des échantillons. Ainsi, par le procédé de l'invention, il est possible de donner un score de ressemblance en se basant sur les informations d'intensités et de formes. Il est possible de reconnaitre automatiquement dans un échantillon, tel qu'un tissu biologique, la présence d'une forme donnée qui est par exemple caractéristique d'un état physiologique. Il devient alors possible d'établir des classements à base de scores plus précis et fiables que ceux basés uniquement sur le critère intensité, qui peut lui varier suivant la préparation de l'échantillon (dépôt de matrice, temps de dessiccation, congélation, type de tissu, etc.) contrairement aux caractéristiques morphométriques et de texture qui sont préservées quel que soit le protocole choisi.

Selon l'invention, il est avantageusement possible de constituer une base de données (BDD), ou un modèle, compilant les spécifications de plusieurs échantillons d'une même population, tels que plusieurs échantillons d'un même tissu biologique ou de tissus biologiques de même origine/nature. A partir d'une telle base de données, ou d'un tel modèle, il est aisé d'identifier un nouvel échantillon d'une même population ou d'identifier avec certitude un échantillon dans une population.

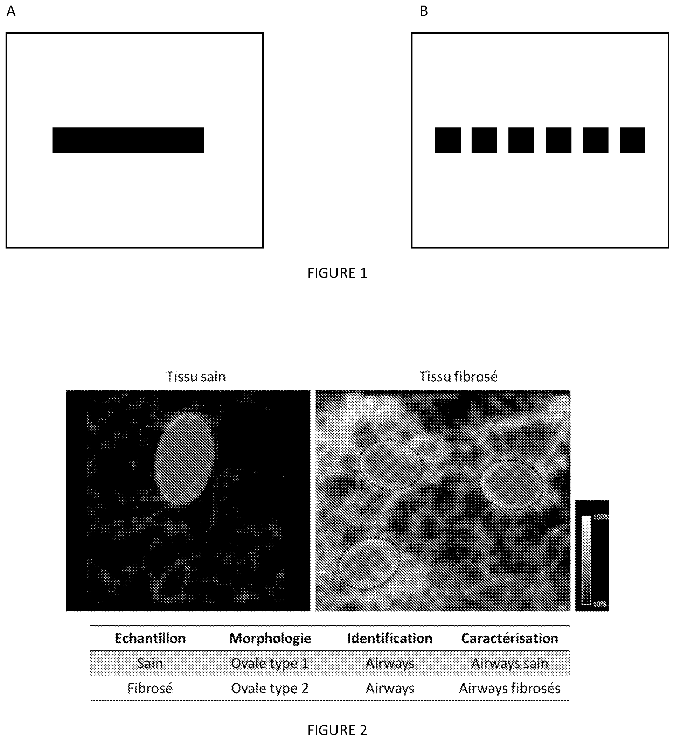

Par exemple, il est possible de caractériser un échantillon de tissu pulmonaire comme étant fibrosé comparativement à un échantillon de tissu pulmonaire sain. La figure 2 montre plus particulièrement les résultats obtenus à partir de la caractérisation morphométrique des jeux de données d'imagerie obtenus pour l'échantillon de tissu pulmonaire sain et l'échantillon de tissu pulmonaire fibrosé. Selon le procédé de l'invention, on identifie deux morphométries en forme d'ellipse dont l'une présente un rapport entre le petit axe et le grand axe tendant vers un (Tissu fibrosé). L'utilisation de ces signatures morphométriques permet de caractériser deux formes de voies respiratoires (airways), respectivement saine (Ovale type 1) et fibrosée (Ovale type 2).

De manière similaire, il est possible de caractériser des échantillons inorganiques, tels que des composants électroniques, des pièces automobiles ou autres, notamment afin d'effectuer un contrôle qualité.

*Comptage cellulaire et dénombrement morphométrique*

Le procédé selon l'invention peut également être utilisé dans le domaine du comptage cellulaire ou bactérien, notamment dans le cadre d'une évaluation environnementale ou de santé. À cet effet, il est possible de sélectionner en imagerie par spectrométrie de masse des molécules spécifiques de la paroi cellulaire (les lipides par exemple), afin de mettre en relief les objets à compter.

Avec le procédé selon l'invention, on isole les formes avec un facteur moléculaire, alors que jusqu'à présent cela est réalisé par signaux optiques, et notamment par microscopie optique ou cytométrie de flux. L'invention permet de dépasser les limites de sensibilité de détection obtenues par les signaux optiques, mais également de vitesse de travail, de précision (moins de faux positifs) et à augmenter le nombre de paramètres simultanément analysés. Selon l'invention, les cellules peuvent être dénombrées et reconnues sur la base de leur morphologie, tout en indiquant le profil moléculaire comme l'activité métabolique de la cellule identifiée. Il est donc possible de dénombrer de multiples types cellulaires, biologiques ou histologiques et leur activité physiologique.

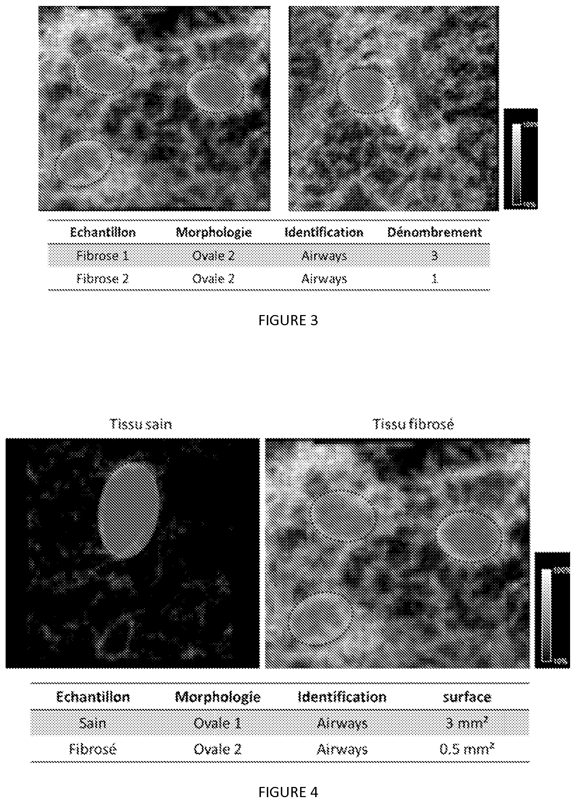

La figure 3 décrit le dénombrement automatisé par morphométrie sur des jeux de données d'imagerie obtenus pour des échantillons de voies aériennes (airways) de deux tissus fibrosés. La détection automatisée des formes ovales permet d'identifier et dénombrer les structures histologiques d'intérêt (ici les voies respiratoires) sans corrélation avec des colorations histologiques adjacentes.

*Étude cinétique des morphométries*

Le procédé selon l'invention peut également être utilisé dans l'étude cinétique de formes, notamment pour suivre l'évolution dans le temps de la morphométrie (forme, surface, volume...) d'éléments d'intérêt (molécules, ions, m/z) dans l'échantillon. Il est notamment possible de mettre en évidence un changement de morphométrie, par exemple le grossissement ou rétrécissement, d'une région d'intérêt dans le temps.

Il est également possible d'envisager des stades d'évolutions des formes dans un échantillon biologique, en accord avec d'autres études de stades de l'échantillon biologique. Par exemple, il est possible via le procédé de l'invention de donner des courbes de surface en fonction d'une ou plusieurs masses cibles dans le temps. Si des paliers ou stades spécifiques sont identifiés (variation de morphométrie, paliers, oscillation de formes...), ils peuvent potentiellement être corrélés à des stades connus de l'échantillon biologique (par exemple, changement de grade d'un tissu cancéreux).

La figure 4 illustre l'application du procédé selon l'invention à l'étude de l'évolution de la constriction de voies aériennes dans un tissu fibrosé. Comme cela est représenté, il est possible avec le procédé de l'invention de déterminer la surface des voies aériennes au cours du temps et donc de suivre l'impact de la fibrose sur la constriction des voies aériennes.

*Typage cellulaire ou tissulaire*

Le procédé selon l'invention peut être utilisé pour identifier des types cellulaires ou des sous structures tissulaires dans un échantillon biologique végétal ou animal. Ce typage cellulaire est rendu possible grâce aux morphométries de chaque cellule qui leurs sont spécifiques. Ainsi en fonction des morphométries cellulaires obtenues, il est possible de déterminer le ou les types cellulaires contenus au sein d'un ou plusieurs échantillons.

Depuis peu, des développements instrumentaux ont permis de descendre la résolution spatiale de l'imagerie MALDI en dessous de 10 $\mu$m. La technologie SIMS quant à elle permet d'obtenir une résolution inférieure à 1 $\mu$m en routine. En considérant que la taille moyenne d'une cellule est de 10-15 $\mu$m, on peut considérer que l'imagerie par spectrométrie de masse atteint une résolution cellulaire permettant de les discriminer dans des jeux de données moléculaires.

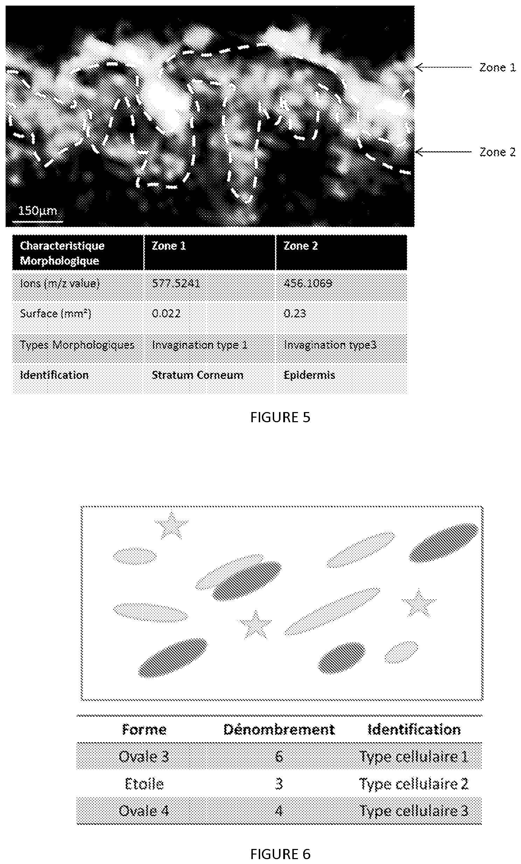

La figure 5 illustre l'application du procédé de l'invention dans le cadre du typage tissulaire sur une coupe de tissu de peau et sans corrélation histologique. Les zones du tissu (Stratum corneum et Epiderme) sont identifiées grâce à leurs morphométries spécifiques obtenues après acquisition en ISM.

De même, la figure 6 illustre de manière schématique l'application du procédé de l'invention dans le cadre du dénombrement et du typage cellulaire directement sur / dans un échantillon biologique et sans corrélation histologique. Les cellules de l'échantillon (tissu, solution ou culture cellulaire) sont typées grâce à leurs morphométries spécifiques obtenues après acquisition en ISM.

**Exemples**

L'invention va maintenant être décrite plus en détail à l'aide d'exemples précis. Ces exemples sont donnés à titre illustratif et nullement limitatif de l'invention.

*Exemple 1 : Procédure pour caractériser un échantillon ou une région d'intérêt en combinant des informations spectrales et spatiales.*

Le présent exemple a pour but de mettre en évidence les différences d'informations susceptibles de découler d'un même jeu de données d'imagerie acquises pour un échantillon, selon que l'on prend en compte les seules données liées aux intensités pour un rapport *m/z* donné dans ledit échantillon ou les caractéristiques morphométriques et de texture associées à ce rapport *m/z.*

Une fois les données d'imagerie par spectrométrie de masse (positions, rapport *m/z*, intensités) d'un échantillon acquises, par toute méthode connue, on procède par exemple selon les étapes ci-dessous :

1/ Charger les images obtenues à partir des données d'imagerie ;

2/ Déterminer un seuil pour *binariser* les images en utilisant, par exemple, la méthode d'Otsu

3/ Labelliser et compter des objets via un algorithme non optimisé

4/ Récupération du nombre de positions non nulles dans une variable

5/ Récupération du nombre de pixels de l'objet ou de l'image dans une variable

6/ Calcul de l'intensité moyenne dans une variable

7/ Tests pour déterminer si un objet possède au moins certaines propriétés de forme

De manière simplifiée, l'étape 3 peut être mise en œuvre via l'algorithme ci-dessous :

```
« Tant que l'on n'a pas parcouru l'image en entier :
        Parcourir l'image ligne par ligne
        Si on rencontre un pixel non nul (on appartient à un objet)
        Parcours de son voisinage et des voisinages de voisinage en 8
        connexités pour mettre les pixels de l'objet à 0
                Incrémentation du compteur d'objets
        Fin du parcours de voisinage
Fin du pixel non nul
Fin du parcours de ligne
Fin de l'algorithme »
```

L'étape 7 de test peut par exemple être mise en œuvre en faisant une ouverture (Erosion $\varepsilon$, suivi d'une dilatation $\delta$) par un élément structurant (ES) présentant une ou des propriétés à tester. Si l'addition de pixel de l'ouverture par l'ES est non nulle, alors l'image/la région possède la propriété.

Ouverture : $A \circ B = (A \ominus B) \oplus B$
Erosion : $A \ominus B = \{z \in E | B_{\approx} \subseteq A\}$, $B_{\approx} = \{b + z | b \in B\}$, $\forall z \in E$
Dilatation : $A \oplus B = \{z \in E | (B^s)_{\approx} \cap A \neq \varnothing\}$, $B^s = \{x \in E | - x \in B\}$

Résultats

Les étapes décrites ci-dessus ont été appliquées à des données d'imagerie acquises classiquement pour 2 segments (figure 1) présentant chacun une longueur de 6 pixels, en continu (figure 1A) ou en fragmenté (figure 1B) et une intensité moyenne identique sur ces 6 pixels.

Alors que la prise en compte des seules intensités ne permet pas de différencier les deux segments, la caractérisation morphologique et de texture obtenue par le procédé selon l'invention permet de mettre en évidence les différences entre les deux segments (tableau 1).

Tableau 1 : Caractéristiques découlant des données d'imagerie

| | Intensité moyenne | Surface | Nombre d'objets | Surface par objet | Contient un segment de longueur 4 |
|---|---|---|---|---|---|
| Image 1 | 11.475 | 6 | 1 | 6 | Oui |
| Image 2 | 11.475 | 6 | 6 | 1 | Non |

*Exemple 2 : Procédure pour l'indentification de pics d'intérêt et de biomarqueurs associés à partir de données morphométriques*

Matériel & méthode

*Les animaux :*

Cinq poumons de rats ont été utilisés pour cette étude. Trois proviennent de rats ayant subis un traitement à la bléomycine (Apollo Scientific, UK) par les voies aériennes **(oropharyngeal aspiration route)** à une dose de 1 mg/kg pendant sept jours et deux proviennent d'animaux ayant reçu une solution saline de manière similaire pour la même durée. Tous les rats étaient des Sprague Dawley, Crl :CD (SD) mâles. Les deux groupes ont été sacrifiés vingt-deux jours après le début de l'expérience. Les poumons ont été gonflés à l'agarose, fixé dans du formol avec 10% de solution tampon neutre et congelés à -80°C. Les expériences animales étaient conformes à l'Animais (Scientific Procédures) Act de 1986.

*Préparation pour acquisition d'images par spectrométrie de masse (SM) :*

Pour l'acquisition des images, des lames ITO ont été achetées auprès de Delta Technologies (Loveland, USA) et ont été recouvertes avec de la 9-aminoacridine (9AA).

Des sections de tissus frais avec une épaisseur de 12 μm ont été obtenues en utilisant un cryostat microm HM560 (Thermo Scientific, Allemagne) à -35°C et montées sur les lames ITO. De plus, des sections d'homogénat de reins de rat dopés en drogue avec une épaisseur de 10 μm ont été déposés sur les même lames afin de servir de contrôle qualité pour l'évaluation de la reproductibilité et de la variabilité. Les lames ont été retirées du cryostat après une heure puis desséchées pendant 20 minutes avant d'être finalement conservées à -80°C jusqu'à utilisation.

La matrice utilisée était une solution de 9AA à 5 mg/mL dans un solvant MeOH/H20(4 :1 v :v) ; elle a été déposée en dix couches successives avec un appareil de dépôt automatisé Suncollect (SunChrom GmBH, Friedrichsdorf, Allemagne). La première couche a été appliquée à un débit de 10 μL/min, la seconde couche à un débit de 20 μL/min et les suivantes à 30 μL/min.

*Acquisition des images SM :*

Un spectromètre de masse MALDI-FTICR (7T Solarix, Bruker Daltonics, Brême, Allemagne) équipé d'un laser SmartBeam II utilisé à une énergie de sortie de 80% et un taux de répétition de 1000 Hz a été utilisé pour acquérir les filtres de masse en mode "full scan" pour les *m/z* compris entre 100 et 1000 avec une résolution spatiale de 30 μm et en mode négatif. Chaque spectre de masse correspond à l'accumulation de 500 tirs laser consécutifs au même endroit. Une calibration interne a été faite en utilisant la matrice de 9AA ainsi que des phospholipides compris entre les *m/z* 200 et 900. Le spectromètre de masse était contrôlé par l'utilisation des logiciels FTMS Control 2.0 et FlexImaging 4.0 (Bruker Daltonics, Brême, Allemagne).

Les régions choisies pour acquisitions étaient des voies aériennes pulmonaires car la bléomycine devrait y induire des changements.

*La détection de pics :*

Sont considérés comme pics les maxima du spectre moyen transformé d'une condition dépassant un seuil. La transformation utilisée a été la soustraction de la médiane du signal sans les valeurs nulles divisé par la déviation absolue à la médiane du signal sans les valeurs nulles multipliée par 1,4826. Cela donne une approximation du rapport signal sur bruit en chaque point. L'idée étant que le bruit suit une distribution à peu près normale et que le vrai signal est présent dans moins de la moitié des mesures agrégées dans le spectre moyen, l'élimination des valeurs nulles a été fait car le signal semble avoir subi une compression par ondelette destructive par FTMS Control 2.0. D'autres manières d'approximer le bruit ont été testées (par exemple, la même mesure mais faite localement, ou la distance à d'un pic à une gaussienne censée le représenter) mais n'ont pas donné de résultats meilleurs pour les seuils faibles. Le seuil retenu pour cette étude est de 1 pour avoir le moins de faux négatifs que possible mais excluant le plus de bruit possible.

*Les images exportées :*

Pour chaque pic détecté, correspondant à un biomarqueur potentiel, et pour chaque région imagée, l'image de l'intensité maximale dans la fenêtre du pic est étirée dans une palette en niveau de gris ayant 8 bits de profondeur puis est exportée au format JPEG sans compression. Le choix de n'utiliser qu'un seul canal a été fait pour faciliter l'inspection visuelle des résultats. Environ 2000 ions à imager sur 12 régions (6 dans la condition 1 et 6 dans la condition 2) ont été obtenus.

*Caractérisation morphologique :*

Pour chaque image :
Pour essayer de débruiter l'image, une ouverture est faite sur l'image en niveau de gris en utilisant un élément structurant de taille 2 x 2, suivie par une fermeture utilisant le même élément structurant : $I = (((O \ominus B_1) \oplus B_1) \oplus B_2) \ominus B_2$, O étant l'image originale en niveau de gris, dans notre cas $B_1 = B_2 = B$ l'élément structurant, un masque booléen de valeurs varies centre au coin inférieur droit, les valeurs manquantes ont été obtenues par duplication de la ligne ou colonne la plus proche.

L'image est ensuite binarisée par l'application de la méthode d'Otsu (dans notre cas avec un seuil unique) la

maximisation de $\eta = \sigma_B^2 / \sigma_T^2$ avec $\sigma_B^2 = \omega_0 \omega_1 (\mu_1 - \mu_0)^2$ et $\sigma_T^2 = \sum_{i=1}^{L} (i - \mu_T) * p_i,$ avec

$\omega_0 = \sum_{i=1}^{k} p_i,$ $\omega_1 = 1 - \omega_0,$ $\mu_0 = \sum_{i=1}^{k} i p_i / \omega_0,$ $\mu_1 = \sum_{i=k+1}^{L} i p_i / \omega_1,$ $p_i = \frac{n_i}{N},$

$$p_i \geq 0, \sum_{i=1}^{L} p_i = 1$$

pour une image contenant $N$ pixels, $L$ niveaux de gris et $n_i$ le nombre de pixels prenant la valeur de niveau de gris $i$;

Avant ou après cela, la surface de l'image en pixel est calculée ;

Puis, le nombre d'objets dans l'image binarisée est compté en utilisant le cardinal de l'ensemble des labels utilisés pour créer l'image labellisée telle que décrite dans Rosenfeld et Pfaltz (1996) en 4 connexité ;

Finalement, la surface moyenne des objets par unité de surface est établie.

*Comparaison :*

Deux tests t de Welch ont été faits entre les deux conditions, l'un basé sur le nombre d'objets par unité de surface et l'autre sur la surface moyenne des objets par unité de surface. Le test t de Welch a été retenu car il s'applique bien à des échantillons de petite taille non appariés et qu'il n'est pas certain que les variances des deux populations soient égales. Un test de Mann-Whitney-Wilcoxon aurait autrement pu être utilisé.

200 biomarqueurs ont été identifiés comme significativement différents entre la condition contrôle et la condition traitée sur la base d'utilisation de critères morphométriques, dont certains biomarqueurs ne sont identifiés qu'en utilisant les critères morphométriques.

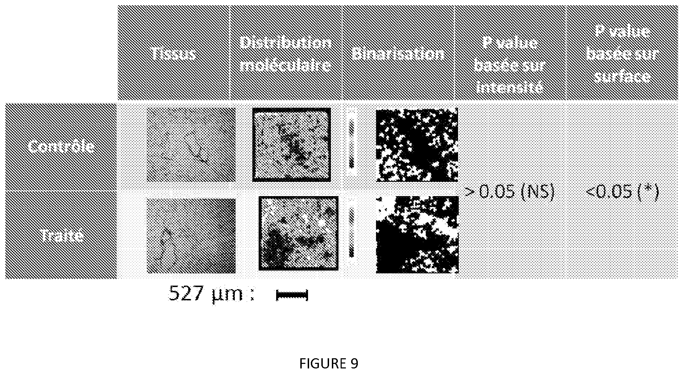

Comme cela est représenté à la figure 9, un composant membranaire impliqué dans l'apoptose a pu être identifié (m/z 718.505), qui n'était pas détectable en ne tenant compte que des intensités (NS : Non significatif ; * : différence significative)

*Modélisation :*

Un modèle mathématique a été réalisé sur la base des biomarqueurs potentiels identifiés de la condition traitée. Ce modèle a été utilisé à des fins exploratoires pour classifier des échantillons tests sur la base des caractères morphométriques extraits.

La présente étude pourrait être poursuivie pour :

- Normaliser les données ;
- Faire de l'identification de pics afin d'associer une molécule à un pic ;
- Faire de l'interprétation biologique ;
- Faire de la classification / de l'apprentissage automatique (« machine learning ») en utilisant par exemple des plateformes nuagiques (« cloud »).

*Exemple 3 : Autres applications*

De très nombreuses applications sont envisageables, et peuvent notamment être mise en œuvre en utilisant les étapes décrites à l'exemple 1 ou l'exemple 2. Par exemple, comme cela a été exposé ci-dessus, l'invention peut être utilisée dans le domaine médical et pharmaceutique, pour identifier de nouveaux biomarqueurs, pour le filtrage et la classification moléculaire, le dénombrement cellulaire et morphologique, l'étude de l'évolution dans le temps d'une maladie ou d'un traitement, le typage cellulaire ou tissulaire, etc. Selon l'invention, il est également possible, à partir des surfaces et/ou volumes de distribution d'un ion dans un échantillon, de quantifier de manière relative ou absolue ledit ion dans ledit échantillon. Bien entendu, l'invention trouve des applications dans d'autres domaines, tels que le contrôle qualité, l'art, l'analyse comparée et automatisée d'objets, l'étude de la composition de matériaux, etc.

**Revendications**

1. Procédé d'identification par imagerie par spectrométrie de masse (ISM) d'une molécule d'intérêt dans un échantillon d'intérêt choisi parmi un tissu biologique et un liquide biologique, selon lequel

    i) On analyse un arrangement spatial d'une pluralité d'ions dans l'échantillon d'intérêt à partir de données d'ISM desdits ions dans ledit échantillon pour déterminer des caractéristiques morphométriques définissant des formes géométriques et des dimensions mathématiques associées à ces formes géométriques et/ou des caractéristiques de texture définissant un agencement des formes géométriques entre elles associées auxdits ions dans ledit échantillon ;

    ii) On compare les caractéristiques morphométriques et/ou de texture associées à la pluralité d'ions dans ledit échantillon d'intérêt avec des données morphométriques et/ou de texture associées à une pluralité d'ions dans un échantillon de référence ;

iii) On identifie au moins un ion caractéristique de l'échantillon, qui présente des caractéristiques morphométriques et/ou de textures différentes par rapport à celles qu'il a dans l'échantillon de référence ;

iv) On identifie la molécule correspondant audit ion identifié à l'étape iii).

2. Procédé d'identification d'une molécule dans un échantillon selon la revendication 1, comprenant l'étape additionnelle selon laquelle on visualise les caractéristiques morphométriques et/ou de texture associées à au moins un ion directement sur une image de l'échantillon.

3. Procédé d'identification d'une molécule dans un échantillon selon l'une des revendications précédentes, selon lequel l'étape d'analyse de l'agencement spatial dudit au moins un ion est réalisée par mise en œuvre d'un procédé de reconnaissance de forme et/ou d'analyse de texture.

4. Procédé d'identification d'une molécule dans un échantillon selon l'une des revendications précédentes, comprenant l'étape préalable selon laquelle on acquiert des données par ISM, pour une pluralité d'ions dans l'échantillon.

5. Procédé d'identification d'une molécule dans un échantillon selon l'une des revendications précédentes, comprenant l'étape selon laquelle on réalise une base de données (BDD) ou un modèle comprenant des caractéristiques morphométriques et/ou de texture d'une pluralité d'ions dans ledit échantillon d'intérêt, et optionnellement l'étape additionnelle selon laquelle on implémente la base de données (BDD) ou le modèle avec les données spectrales d'ISM d'au moins un ion dans ledit échantillon d'intérêt, et/ou des données physicochimiques, physiologiques et/ou biologiques propres audit échantillon d'intérêt.

6. Méthode de caractérisation d'un échantillon choisi parmi un tissu biologique et un liquide biologique par imagerie par spectrométrie de masse (ISM), ladite méthode comprenant les étapes selon lesquelles :

a) On acquiert des données par ISM, pour au moins un ion dans l'échantillon ; puis

b) On mesure et/ou quantifie un arrangement spatial dudit au moins un ion dans l'échantillon à partir de données relatives aux positions dudit au moins un ion dans ledit échantillon afin d'identifier des caractéristiques morphométriques définissant des formes géométriques et des dimensions mathématiques associées à ces formes géométriques et/ou des caractéristiques de texture définissant un agencement des formes géométriques entre elles, et de caractériser en conséquence la distribution dudit au moins un ion dans l'échantillon par ces caractéristiques morphométriques et/ou de texture.

7. Méthode de caractérisation d'un échantillon par ISM selon la revendication 6, comprenant les étapes selon lesquelles :

c) on segmente des données d'imagerie de l'échantillon en régions d'intérêt représentatives des profils d'intensités moléculaires de l'échantillon ; et

d) on mesure et/ou quantifie un arrangement spatial des ions du profil moléculaire d'une région d'intérêt par des caractéristiques morphométrique et/ou de texture dudit profil moléculaire.

8. Méthode de caractérisation d'un échantillon par ISM selon la revendication 6 ou 7, comprenant l'étape selon laquelle :

e) on réalise une base de données (BDD) ou un modèle, comprenant des caractéristiques morphométriques et/ou de texture d'une pluralité d'ions dans ledit échantillon, et optionnellement

f) on implémente la base de données (BDD) ou le modèle avec les données spectrales d'ISM d'au moins un ion dans ledit échantillon, et/ou des données physicochimiques, physiologiques et/ou biologiques propres audit échantillon.

9. Utilisation d'une base de données ou d'un modèle obtenu selon la méthode de caractérisation de la revendication 8, pour l'identification d'un tissu, d'une région d'un tissu, d'un type cellulaire, d'un état physiologique (sain ou pathologique) d'un tissu ou le comptage cellulaire dans un échantillon biologique.

10. Méthode de caractérisation d'un échantillon par ISM selon la revendication 6, comprenant les étapes supplémentaires selon lesquelles:

i) On enregistre les caractéristiques morphométriques et/ou de texture obtenues à l'étape a) ;

ii) On compare les caractéristiques morphométriques et/ou de textures associées audit au moins un ion de l'échantillon à identifier avec des données morphométriques et/ou de textures associées à un ion de référence.

**11.** Méthode de caractérisation d'un échantillon par ISM selon la revendication 10, comprenant l'étape additionnelle selon laquelle on établit une base de données ou un modèle avec des données morphométriques et/ou de texture associées à au moins un ion de référence, obtenues à partir de plusieurs échantillons de référence, lesdites données morphométriques et/ou de texture étant représentatives de l'arrangement spatial dudit au moins un ion de référence dans lesdits échantillons de référence, l'étape iii) étant mise en œuvre en comparant les caractéristiques morphométriques et/ou de textures associées audit au moins un ion de l'échantillon à identifier avec les données de la base de données ou du modèle.

**12.** Support de données lisible par ordinateur comprenant des instructions exécutables par l'ordinateur, adaptées pour permettre à un système informatique d'exécuter le procédé d'identification d'une molécule d'intérêt dans un échantillon selon l'une quelconque des revendications 1 à 5, et/ou la méthode de caractérisation d'un échantillon selon les revendications 6 à 8, et/ou selon la revendication 10 ou 11.

**13.** Support de données lisible par ordinateur selon la revendication 12, **caractérisé en ce qu'**il comporte une base de données comprenant des données morphologiques et/ou de texture d'au moins un ion dans au moins un échantillon.

**Patentansprüche**

**1.** Verfahren zur Identifizierung mittels Massenspektrometriebildgebung (ISM) eines Moleküls von Interesse in einer Probe von Interesse, ausgewählt aus einem biologischen Gewebe und einer biologischen Flüssigkeit, gemäß dem

i) eine räumliche Anordnung einer Vielzahl von Ionen in der Probe von Interesse von ISM-Daten der Ionen in der Probe analysiert wird, um morphometrische Merkmale, die geometrische Formen und mathematische Dimensionen definieren, die mit diesen geometrischen Formen assoziiert sind, und/oder Texturmerkmale, die eine Verteilung der geometrischen Formen untereinander definieren, die mit den Ionen in der Probe assoziiert sind, zu bestimmen;

ii) die morphometrischen Merkmale und/oder Texturmerkmale, die mit der Vielzahl von Ionen in der Probe von Interesse assoziiert sind, mit morphometrischen Daten und/oder Texturdaten, die mit einer Vielzahl von Ionen in einer Referenzprobe assoziiert sind, verglichen werden;

iii) wenigstens ein charakteristisches Ion der Probe identifiziert wird, das morphometrische Merkmale und/oder Texturmerkmale aufweist, die verglichen mit denjenigen in der Referenzprobe verschieden sind;

iv) das Molekül identifiziert wird, das dem in Schritt iii) identifizierten Ion entspricht.

**2.** Verfahren zur Identifizierung eines Moleküls in einer Probe gemäß Anspruch 1, umfassend den zusätzlichen Schritt, gemäß dem die morphometrischen Merkmale und/oder Texturmerkmale, die mit wenigstens einem Ion assoziiert sind, direkt auf einem Bild der Probe visualisiert werden.

**3.** Verfahren zur Identifizierung eines Moleküls in einer Probe gemäß einem der vorhergehenden Ansprüche, gemäß dem der Schritt der Analyse der räumlichen Verteilung des wenigstens einen Ions mittels Durchführung eines Verfahrens zur Erkennung der Form und/oder der Analyse der Textur erfolgt.

**4.** Verfahren zur Identifizierung eines Moleküls in einer Probe gemäß einem der vorhergehenden Ansprüche, umfassend den vorherigen Schritt, gemäß dem Daten mittels ISM für eine Vielzahl von Ionen in der Probe erfasst werden.

**5.** Verfahren zur Identifizierung eines Moleküls in einer Probe gemäß einem der vorhergehenden Ansprüche, umfassend den Schritt, gemäß dem eine Datenbank (BDD) oder ein Modell, umfassend morphometrische Merkmale und/oder Texturmerkmale einer Vielzahl von Ionen in der Probe von Interesse, erstellt wird, und gegebenenfalls den weiteren Schritt, gemäß dem die Datenbank (BDD) oder das Modell mit den ISM-Spektraldaten wenigstens eines Ions in der Probe von Interesse und/oder physikochemischen, physiologischen und/oder biochemischen Daten, die für die Probe von Interesse charakteristisch sind, implementiert wird.

**6.** Verfahren zur Charakterisierung einer Probe, ausgewählt aus einem biologischen Gewebe und einer biologischen Flüssigkeit, mittels Massenspektroskopiebildgebung (ISM), wobei das Verfahren die Schritte umfasst, gemäß denen

a) Daten mittels ISM für wenigstens ein Ion in der Probe erfasst werden; dann

b) eine räumliche Anordnung des wenigstens einen Ions in der Probe von Daten gemessen und/oder quantifiziert wird, die sich auf die Positionen des wenigstens einen Ions in der Probe beziehen, um morphometrische Merkmale, die geometrische Formen und mathematische Dimensionen definieren, die mit diesen geometrischen Formen assoziiert sind, und/oder Texturmerkmale zu identifizieren, die eine Verteilung der geometrischen Formen untereinander definieren, und um die Verteilung des wenigstens einen Ions in der Probe mithilfe dieser morphometrischen Merkmale und/oder Texturmerkmale entsprechend zu charakterisieren.

7. Verfahren zur Charakterisierung einer Probe mittels ISM gemäß Anspruch 6, umfassend die Schritte, gemäß denen

c) die Bildgebungsdaten der Probe in Bereiche von Interesse aufgeteilt werden, die für die molekularen Intensitätsprofile der Probe repräsentativ sind; und

d) eine räumliche Anordnung der Ionen des molekularen Profils einer Region von Interesse mithilfe morphometrischer Merkmale und/oder Texturmerkmale des molekularen Profils gemessen und/oder quantifiziert wird.

8. Verfahren zur Charakterisierung einer Probe mittels ISM gemäß Anspruch 6 oder 7, umfassend den Schritt, gemäß dem

e) eine Datenbank (BDD) oder ein Modell, umfassend morphometrische Merkmale und/oder Texturmerkmale einer Vielzahl von Ionen in der Probe, erstellt wird, und gegebenenfalls

f) die Datenbank (BDD) oder das Modell mit den ISM-Spektraldaten wenigstens eines Ions in der Probe und/oder physikochemischen, physiologischen und/oder biochemischen Daten, die für die Probe charakteristisch sind, implementiert wird.

9. Verwendung einer Datenbank oder eines Modells, erhalten gemäß dem Verfahren zur Charakterisierung von Anspruch 8, zur Identifizierung eines Gewebes, eines Bereichs eines Gewebes, eines Zelltyps, eines physiologischen Zustands (gesund oder pathologisch) eines Gewebes oder zur Zellzählung in einer biologischen Probe.

10. Verfahren zur Charakterisierung einer Probe mittels ISM gemäß Anspruch 6, umfassend die zusätzlichen Schritte, gemäß denen:

i) die in Schritt a) erhaltenen morphometrischen Merkmale und/oder Texturmerkmale aufgezeichnet werden;

ii) die morphometrischen Merkmale und/oder Texturmerkmale, die mit wenigstens einem Ion der zu identifizierenden Probe assoziiert sind, mit morphometrischen Daten und/oder Texturdaten, die mit einem Referenzion assoziiert sind, verglichen werden.

11. Verfahren zur Charakterisierung einer Probe mittels ISM gemäß Anspruch 10, umfassend den zusätzlichen Schritt, gemäß dem eine Datenbank oder ein Modell mit morphometrischen Daten und/oder Texturdaten erstellt wird, die mit wenigstens einem Referenzion assoziiert sind und von mehreren Referenzproben erhalten sind, wobei die morphometrischen Daten und/oder Texturdaten für die räumliche Anordnung des wenigstens einen Referenzions in den Referenzproben repräsentativ sind, wobei Schritt iii) durch Vergleich der morphometrischen Merkmale und/oder Texturmerkmale, die mit wenigstens einem Ion der zu identifizierenden Probe assoziiert sind, mit den Daten der Datenbank oder des Modells durchgeführt wird.

12. Computerlesbarer Datenträger, umfassend Anweisungen, die vom Computer ausgeführt werden können und geeignet sind, einem Computersystem die Ausführung des Verfahrens zur Identifizierung eines Moleküls von Interesse in einer Probe gemäß einem der Ansprüche 1 bis 5, und/oder des Verfahrens zur Charakterisierung einer Probe gemäß den Ansprüchen 6 bis 8 und/oder gemäß Anspruch 10 oder 11 zu erlauben.

13. Computerlesbarer Datenträger gemäß Anspruch 12, **dadurch gekennzeichnet, dass** er eine Datenbank enthält, umfassend morphologische Merkmale und/oder Texturmerkmale wenigstens eines Ions in wenigstens einer Probe.

**Claims**

1. Process for identifying by mass spectrometry imaging (MSI) a molecule of interest in a sample of interest selected from a biological tissue and a biological liquid, wherein:

i) A spatial arrangement of a plurality of ions in the sample of interest from MSI data of said ions in said sample is analyzed for determining morphometric features defining geometrical shapes and mathematical dimensions associated with these geometrical shapes and/or texture features defining an arrangement of geometrical shapes with each other associated with said ions in said sample;

ii) Morphometric and/or texture features associated with the plurality of ions in said sample of interest are compared with morphometric and/or texture data associated with a plurality of ions in a reference sample;

iii) At least one characteristic ion of the sample is identified, which presents different morphometric and/or texture features compared to the ones it has in the reference sample;

iv) The molecule corresponding to said ion identified in step iii) is identified.

2. Process for identifying a molecule in a sample according to claim 1, comprising the additional step wherein the morphometric and/or texture features associated with at least one ion are viewed directly on an image of the sample.

3. Process for identifying a molecule in a sample according to one of the preceding claims, wherein the step for analyzing the spatial arrangement of said at least one ion is achieved by applying a recognition process of shape and/or texture analysis.

4. Process for identifying a molecule in a sample according to one of the preceding claims, comprising the preliminary step according to which data are acquired by MSI, for a plurality of ions in the sample.

5. Process for identifying a molecule in a sample according to one of the preceding claims, comprising the step wherein a database (DB) or a model is made comprising morphometric and/or texture features of a plurality of ions in said sample of interest, and optionally the additional step wherein the database (DB) or the model is implemented with spectral MSI data of at least one ion in said sample of interest, and/or physicochemical, physiological and/or biological data specific to said sample of interest.

6. A method for characterizing a sample selected from a biological tissue and a biological liquid by mass spectrometry imaging (MSI), said method comprising the steps wherein:

a) Data are acquired by MSI, for at least one ion in the sample; then

b) A spatial arrangement of said at least one ion in the sample is measured and/or quantified from data relative to the positions of said at least one ion in said sample in order to identify morphometric features defining geometrical shapes and mathematical dimensions associated with these geometrical shapes and/or texture features defining an arrangement of geometrical shapes between them, and to characterize accordingly the distribution of said at least one ion in the sample by these morphometric and/or texture features.

7. Method for characterizing a sample by MSI according to claim 6, comprising the steps wherein :

c) Imaging data of the sample are segmented into regions of interest representative of the molecular intensity profiles of the sample; and

d) A spatial arrangement of the ions of the molecular profile of a region of interest is measured and /or quantified by morphometric and/or texture features of said molecular profile.

8. Method for characterizing a sample by MSI according to claim 6 or 7, comprising the step wherein:

e) A database (DB) or a model is made, comprising morphometric and/or texture features of a plurality of ions in said sample, and optionally

f) The database (DB) or the model is implemented with spectral MSI data of at least one ion in said sample, and/or physicochemical, physiological and/or biological data specific to said sample.

9. Use of a database or of a model obtained according to the characterization method of claim 8, for identifying a tissue, a region of a tissue, a cell type, a physiological condition (healthy or pathological) of a tissue or the cell counting in a biological sample.

10. Method for characterizing a sample by MSI according to claim 6, comprising the additional steps wherein :

i) the morphometric and/or texture features obtained in step a) are recorded;

ii) the morphometric and/or texture features associated with said at least one ion of the sample to be identified are compared with morphometric and/or texture data associated with a reference ion.

11. Method for characterizing a sample by MSI according to claim 10, comprising the additional step according to which a database or a model is established with morphometric and/or texture data associated with at least one reference ion, obtained from several reference samples, said morphometric and/or texture data being representative of the spatial arrangement of said at least one reference ion in said reference samples, step iii) being applied by comparing the morphometric and/or texture features associated with said at least one ion of the sample to be identified with data from the database or the model.

12. A computer-legible data medium comprising instructions which may be executed by the computer, adapted for allowing a computer system to execute the process for identifying a molecule of interest in a sample according to any one of claims 1 to 5, and/or the method for characterizing a sample according to claims 6 to 8, and/or according to claim 10 or 11.

13. A computer-legible data medium according to claim 12, wherein it includes a database comprising morphological and/or texture data of at least one ion in at least one sample.

A

B

FIGURE 1

Tissu sain          Tissu fibrosé

| Echantillon | Morphologie | Identification | Caractérisation |
|:-----------:|:-----------:|:--------------:|:---------------:|
| Sain | Ovale type 1 | Airways | Airways sain |
| Fibrosé | Ovale type 2 | Airways | Airways fibrosés |

FIGURE 2

| Echantillon | Morphologie | Identification | Dénombrement |
|---|---|---|---|
| Fibrose 1 | Ovale 2 | Airways | 3 |
| Fibrose 2 | Ovale 2 | Airways | 1 |

FIGURE 3

Tissu sain          Tissu fibrosé

| Echantillon | Morphologie | Identification | surface |
|---|---|---|---|
| Sain | Ovale 1 | Airways | 3 mm$^2$ |
| Fibrosé | Ovale 2 | Airways | 0.5 mm$^x$ |

FIGURE 4

| Characteristique Morphologique | Zone 1 | Zone 2 |
|---|---|---|
| Ions (m/z value) | 577.5241 | 456.1069 |
| Surface (mm²) | 0.022 | 0.23 |
| Types Morphologiques | Invagination type 1 | Invagination type3 |
| Identification | Stratum Corneum | Epidermis |

FIGURE 5

| Forme | Dénombrement | Identification |
|---|---|---|
| Ovale 3 | 6 | Type cellulaire 1 |
| Etoile | 3 | Type cellulaire 2 |
| Ovale 4 | 4 | Type cellulaire 3 |

FIGURE 6

| Echantillon du groupe A | | Echantillon du groupe B | Exemple de critères morphométriques pour différentier le groupe A et le groupe B pour un ion donné |
|---|---|---|---|
| | Vs. | | Nombre d'objets |
| | Vs. | | Moyenne de la surface des objets |
| | Vs. | | Dispersion |
| | Vs. | | Forme |
| | Vs. | | Variabilité inter échantillon des surfaces |

FIGURE 7

Caractéristiques morphométriques

FIGURE 8

527 µm :  ⊢━━┥

FIGURE 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. STAUBER et al.** *J Proteome Res,* 2008, vol. 7 (3), 969-78
- **D. BONNEL et al.** *Anal Bioanal Chem,* 2011
- **T. ALEXANDROV et al.** *J Cancer Res Clin Oncol,* 2012, vol. 139 (1), 85-95
- **T. ALEXANDROV et al.** *J Proteomics,* 2011, vol. 75 (1), 237-45
- **LUXEMBOURG.** *Anal. Chem,* 2004
- **REICHENBACH et al.** Interactive spatio-spectral analysis of three-dimensional mass-spectral (3DxMS) chemical images. *Surface and Interface Analysis,* vol. 43, 529-534
- **CASADONTE et al.** Imaging mass spectrometry to discriminate breast from pancreatic cancer metastasis in formalin-fixed paraffin-embedded tissues. *Proteomics,* vol. 14, 956-964